(19) Europäisches Patentamt / European Patent Office / Office européen des brevets

(11) **EP 3 219 679 A1**

(12) **EUROPEAN PATENT APPLICATION**
published in accordance with Art. 153(4) EPC

(43) Date of publication:
**20.09.2017 Bulletin 2017/38**

(51) Int Cl.:
*C02F 1/46* (2006.01)　　*C25B 9/04* (2006.01)

(21) Application number: **15859278.2**

(86) International application number:
**PCT/JP2015/080953**

(22) Date of filing: **02.11.2015**

(87) International publication number:
**WO 2016/076158 (19.05.2016 Gazette 2016/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.11.2014　JP 2014228806**

(71) Applicant: **Morinaga Milk Industry Co., Ltd.**
**Minato-ku**
**Tokyo 108-8384 (JP)**

(72) Inventor: **MATSUYAMA Koki**
**Higashiyamato-shi**
**Tokyo 207-0021 (JP)**

(74) Representative: **Vossius & Partner**
**Patentanwälte Rechtsanwälte mbB**
**Siebertstrasse 3**
**81675 München (DE)**

(54) **INCORPORATED DEVICE AND METHOD FOR CONTROLLING INCORPORATED DEVICE**

(57)　Provided is an incorporated device that incorporates therein an electrolytic cell and a power control device that is capable of suppressing temperature rise in the electrolytic cell to thereby suppress a reduction in the life of electrodes, and a method for controlling an incorporated device. The incorporated device incorporates therein an electrolytic cell and a power control device that is capable of suppressing temperature rise in the electrolytic cell to thereby suppress a reduction in the life of electrodes. The power control device includes: a voltage-current control circuit that supplies, in a constant current control mode, an electrolysis current to the electrolytic cell while the voltage-current control circuit controls the electrolysis current not to exceed a current value of a reference current, the current value of the reference current being preliminary set according to a rated current of a unit cell constituting the electrolytic cell; and a temperature detecting part that detects an environmental temperature of an outside of the electrolytic cell, the environmental temperature being a temperature of an inside of the incorporated device. The voltage-current control circuit stops supply of the electrolysis current when a detected temperature of the temperature detecting part falls outside of a preliminarily set rated temperature range, and resumes supply of the electrolysis current when the detected temperature of the temperature detecting part returns within the rated temperature range.

FIG. 5

**Description**

TECHNICAL FIELD

The present invention relates to an incorporated device in which an electrolytic cell for producing, by performing electrolysis on a raw material solution, electrolysis water to be used for sterilized water and the like, and a power control device that supplies electric power to this electrolytic cell are incorporated, and to a method for controlling an incorporated device. Priority is claimed on Japanese Patent Application No. 2014-228806, filed November 11,2014, the contents of which are incorporated herein by reference.

BACKGROUND ART

Heretofore, electrolytic cells and power control devices have been available on the market as stand-alone devices (electrolysis modules). However, attention is being drawn to incorporating these into an existing device or system, for example, a device (an incorporated device) that requires sterilized water such as a washing machine, an air conditioner, a dish washer, and a nursing-purposed modular bath.

In the case of electrolysis in an electrolytic cell, there is a problem of heat generation in the electrolytic cell when operated continuously. In a sintered electrode plate of platinum or iridium, when the temperature exceeds 60°C, its coating becomes detached and the life of the electrode becomes significantly reduced. Heretofore, there has been an example of providing a cooling jacket for electrolytic cell cooling, such as the electrolytic cell disclosed in Patent Document 1 in which a coolant flows on the outer side of the electrolytic cell.

[Prior Art Documents]

[Patent Documents]

[Patent Document 1 Japanese Patent No. 3986820

SUMMARY OF THE INVENTION

Problem to be Solved by the Invention

However, since there is a case where the temperature of the coolant is extremely low, warm, or changes depending on the outside temperature, it is difficult to maintain temperature control of the electrolytic cell at a constant level, and it may not only disable stable electrolysis but also may reduce the life of the electrode in some cases. In this type of case, temperature must be measured and a means for cooling must be provided. However, measuring the central temperature of the electrolytic cell is difficult, and also a complex system needs to be built in order to keep the temperature of the electrolytic cell constant and prevent a temperature rise.

Moreover, in those cases where an electrolytic cell is incorporated into an incorporated device, the temperature of the portion which is on the inner side of the incorporated device and is on the outer side of the electrolytic cell (environmental temperature) is determined by heat generation of the incorporated device. As a result, the temperature of the electrolytic cell may rise in some cases depending on the environmental temperature.

The present invention takes into consideration the above point, and is to provide an incorporated device in which an electrolytic cell and a power control device that is capable of suppressing temperature rise in the electrolytic cell to thereby suppress a reduction in the life of electrodes are incorporated, and a method for controlling an incorporated device.

Means for Solving the Problem

In order to solve the above problem, an incorporated device of the present invention incorporates therein: an electrolytic cell that manufactures electrolysis water by electrolysis on a raw material solution by means of electric current applied between an anode and a cathode, and a power control device that supplies electrolysis current to the electrolytic cell based on input direct-current power, the power control device includes: a voltage-current control circuit that supplies, in a constant current control mode, the electrolysis current to the electrolytic cell while the voltage-current control circuit controls the electrolysis current not to exceed a current value of a reference current, the current value of the reference current being preliminary set according to a rated current of a unit cell constituting the electrolytic cell; and a temperature detecting part that detects an environmental temperature of an outside of the electrolytic cell, the environmental temperature being a temperature of an inside of the incorporated device, and the voltage-current control circuit stops supply of the electrolysis current when a detected temperature of the temperature detecting part falls outside of a preliminarily set rated temperature range, and resumes supply of the electrolysis current when the detected temperature of the temperature detecting part returns within the rated temperature range.

The incorporated device of the present invention is such that the power control device further includes: a current detecting part that is connected to an output terminal of the voltage-current control circuit and detects a voltage arising between both ends thereof; and a current limiting part that generates the reference current, and the voltage-current control circuit includes: a voltage-current detection circuit that calculates the electrolysis current flowing through the electrolytic cell, based on a voltage between both ends of the current detecting part and a resistance value of the current detecting part; a comparator circuit that compares the electrolysis current with the reference current generated by the current limiting part to output a current comparison result signal indicating a comparison result; and a voltage control circuit that supplies the electrolysis current from the output terminal to the electrolytic cell while the voltage control circuit controls the electrolysis current not to exceed the reference current based on the current comparison result signal.

Moreover, the incorporated device of the present invention is such that the power control device further includes: a voltage-current monitor circuit that outputs analog data that indicates an electric current value of the electrolysis current, to an outside.

Furthermore, a method of the present invention is for controlling an incorporated device, the incorporated device incorporating therein: an electrolytic cell that manufactures electrolysis water by electrolysis on a raw material solution by means of electric current applied between an anode and a cathode, and a power control device that supplies electrolysis current to the electrolytic cell based on input direct-current power, the power control device includes: a voltage-current control circuit that supplies, in a constant current control mode, the electrolysis current to the electrolytic cell while the voltage-current control circuit controls the electrolysis current not to exceed a current value of a reference current, the current value of the reference current being preliminary set according to a rated current of a unit cell constituting the electrolytic cell; and a temperature detecting part that detects an environmental temperature of an outside of the electrolytic cell, the environmental temperature being a temperature of an inside of the incorporated device, and the voltage-current control circuit stops supply of the electrolysis current when a detected temperature of the temperature detecting part falls outside of a preliminarily set rated temperature range, and resumes supply of the electrolysis current when the detected temperature of the temperature detecting part returns within the rated temperature range.

Effect of the Invention

In a power control device to be incorporated into an incorporated device of the present invention, a voltage-current control circuit stops supply of electrolysis current when an environmental temperature falls outside a preliminarily set rated temperature range, and resumes supply of the electrolysis current when the environmental temperature returns within the rated temperature range. Thereby, it is possible to suppress temperature rise in an electrolytic cell without measuring a temperature in the electrolytic cell. As a result, according to the present invention, it is possible to provide an incorporated device that incorporates therein an electrolytic cell and a power control device that is capable of suppressing temperature rise in the electrolytic cell to thereby suppress a reduction in the life of electrodes, and a method for controlling an incorporated device.

BRIEF DESCRIPTION OF THE DRAWINGS

FIG. 1 is a diagram showing a schematic configuration of an electrolytic cell constant-voltage constant-current power source circuit 10 according to a present embodiment.
FIG. 2 is a diagram showing a schematic configuration of a switching CVCC power supply circuit 20 shown in FIG. 1.
FIG. 3 is a diagram for describing controls performed by the electrolytic cell constant-voltage constant-current power source circuit 10.
FIG. 4 is an enlarged view of the portion of switching from the constant current control to the constant voltage control shown in FIG. 3.
FIG. 5 is a diagram showing a configuration of an incorporated device 100 in which an electrolytic cell and a constant current control board incorporated.
FIG. 6 is a diagram showing changes in the electric current value over time when the environmental temperature was 30°C.
FIG. 7 is a diagram showing changes in the electric current value over time when the environmental temperature was 35°C.
FIG. 8 is a diagram showing changes in the electric current value over time when the environmental temperature was 40°C.

FIG. 9 is a diagram showing changes in the electric current value over time when the environmental temperature was 42.5°C.

F1G. 10 is a diagram showing changes in the electric current value over time when the environmental temperature was 45°C.

FIG. 11 is a diagram showing changes in the electric current value over time when the environmental temperature was 47.5°C.

FIG. 12 is a diagram showing changes in the electric current value over time when the environmental temperature was 50°C.

FIG. 13 is a diagram showing changes in the average current value, the effective chlorine concentration, and the electrolytic cell temperature with respect to the environmental temperature.

FIG. 14 is a diagram showing a relationship between the average current value and the effective chlorine concentration.

EMBODIMENTS FOR CARRYING OUT THE INVENTION

Hereunder, an embodiment of the present invention is described in detail, with reference to the drawings.

In the normal constant voltage electrolysis, when a constant voltage from a power supply is applied to an electrolytic cell filled with an electrolyte solution, a high current flows in the initial period of electrolysis, and then the current gradually attenuates. Therefore, in order to maintain a constant current, it is necessary to adjust the concentration of the electrolyte solution. On the other hand, in the normal constant current electrolysis, voltage is adjusted by adjusting the concentration of the electrolyte solution, or electric current is adjusted by means of ON or OFF control of the power supply itself.

In contrast, the electrolysis that uses the power control device of the embodiment of the present invention performs electrolysis with a constant-current and constant-voltage electrolysis method, as described in detail later. In this method, when electrolysis voltage is low (when current exceeds a set value and voltage drops), electric current is limited to a constant level, and when and after the electrolysis voltage reaches a set voltage, electrolysis is performed at the maximum electrolysis voltage.

The maximum electrolysis voltage (rated voltage) is designed preferably to 2.0V (1.5V to 2.5V) per 1 cell, according to the electrolytic cell design (cell configuration). Moreover, the maximum electrolysis current (rated amperage) is designed preferably to the current value (current density) per electrode area according to the catalyst ability of the electrode. However, without being limited to these rated amperage and rated voltage, the power control device is capable of performing constant-current and constant-voltage electrolysis regardless of the cell configuration of the electrolytic cell.

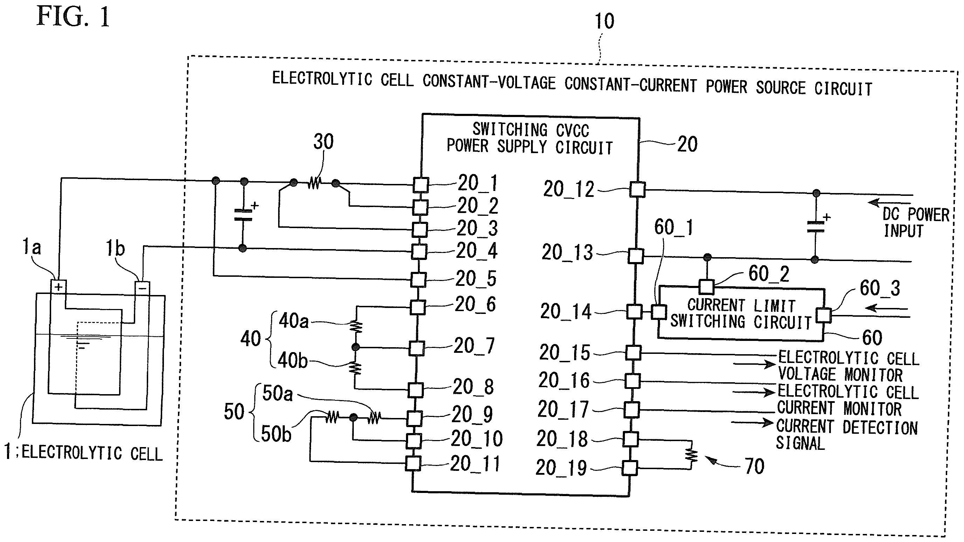

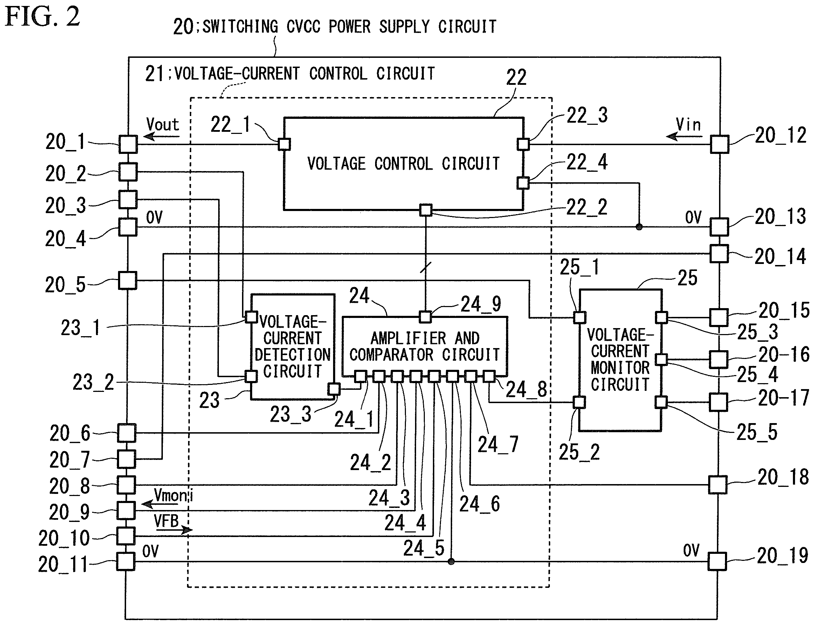

Hereunder, first, the configuration of an electrolytic cell constant-voltage constant-current power source circuit 10 (power control device) is described, with reference to FIG. 1 and FIG. 2. FIG. 1 is a diagram showing a schematic configuration of the electrolytic cell constant-voltage constant-current power source circuit 10 according to the present embodiment. Moreover, FIG. 2 is a diagram showing a schematic configuration of a switching CVCC (constant voltage constant current) power supply circuit 20 (voltage-current control circuit) shown in FIG. 1.

The electrolytic cell constant-voltage constant-current power source circuit 10 includes the switching CVCC power supply circuit 20, a current detecting resistor 30 (current detecting unit), a current limiting resistor 40 (current limiting unit), a voltage division resistor 50 (voltage division unit), a current limit switching circuit 60, and a thermistor resistor 70 (temperature detecting unit).

The switching CVCC power supply circuit 20, within a range that is preliminarily set for each power supply, automatically performs a constant voltage or constant current operation for the electrolytic cell 1, according to a loaded condition (the concentration of the electrolyte solution within the electrolytic cell 1) within a range of a preliminarily set reference voltage value and reference current value, which is described in detail later. Accordingly, the switching CVCC power supply circuit 20 includes no. 1 pin 20_1 to no. 19 pin 20_19 serving as terminals for connecting to respective circuits and the electrolytic cell 1 shown in FIG. 1. Moreover, as shown in FIG. 2, the switching CVCC power supply circuit 20 includes a voltage-current control circuit 21 and a voltage-current monitor circuit 25. Among these, the voltage-current control circuit 21 includes a voltage control circuit 22, a voltage-current detection circuit 23, and an amplifier and comparator circuit 24 (hereunder, referred to simply as comparator circuit). The comparator circuit 24 has a function of amplifying input signals.

As shown in FIG. 1, the no. 1 pin 20_1 is connected to an anode 1a of the electrolytic cell 1 via the current detecting resistor 30. Moreover, the no. 1 pin 20_1 is connected to a no. 1 pin 22_1 of the voltage control circuit 22 shown in FIG. 2.

The voltage control circuit 22 of the switching CVCC power supply circuit 20 is a circuit that supplies electric power (electrolysis voltage, electrolysis current) from the no. 1 pin 20_1 to the anode 1a of the electrolytic cell 1. As described later, the voltage control circuit 22 supplies electric power to the electrolytic cell 1 so as not to exceed the reference current value in the constant current mode (that is to say, by means of constant current), and not to exceed the reference voltage value in the constant voltage mode (that is to say, by means of constant voltage).

As shown in FIG. 1, the no. 2 pin 20_2 is connected to one end of the current detecting resistor 30 (where the resistance value between both ends thereof is denoted as Rs), and is connected to the no. 1 pin 23_1 of the voltage-current detection circuit 23 shown in FIG. 2.

Moreover, the no. 3 pin 20_3 is connected to the other end of the current detecting resistor 30, and is connected to the no. 2 pin 23_2 of the voltage-current detection circuit 23 shown in FIG. 2.

Here, the voltage-current detection circuit 23 converts the voltage arising between both ends of the current detecting resistor 30 (the voltage between both ends thereof) into a current value of the electrolysis current flowing in the electrolytic cell 1 (calculated from the voltage between both ends and resistance value Rs), and outputs the current value after the conversion, from the no. 3 pin 23_3 to the no. 1 pin 24_1 of the comparator circuit 24.

As shown in FIG. 1, the no. 4 pin 20_4 is connected to a cathode 1b of the electrolytic cell 1. Moreover, the no. 4 pin 20_4 is a GND (ground) terminal and is grounded. Furthermore, as shown in FIG. 2, the no. 13 pin 20_13 connected to the no. 4 pin 20_4 is a GND (ground) terminal as with the no. 4 pin 20_4, and is connected to 0V.

The no. 5 pin 20_5 is connected to the anode 1a of the electrolytic cell 1. Moreover, the no. 5 pin 20_5 is connected to the no. 1 pin 25_1 of the voltage-current monitor circuit 25. The voltage-current monitor circuit 25, as one of its functions, outputs to outside, analog data indicating the voltage value of the voltage applied to the electrolytic cell 1 (electrolysis voltage).

As shown in FIG. 1, the current limiting resistor 40 is configured with a series resistance of a current limiting resistor 40a (denoted as resistance value RP1) and a current limiting resistor 40b (denoted as resistance value RP2).

The no. 6 pin 20_6 is connected to one end of the current limiting resistor 40a. Moreover, the no. 6 pin 20_6 is connected to the no. 2 pin 24_2 of the comparator circuit 24.

The no. 7 pin 20_7 is connected to the common connection point of the other end of the current limiting resistor 40a and one end of the current limiting resistor 40b. As shown in FIG. 1 and FIG. 2, the no. 7 pin 20_7 is connected to the no. 1 pin 60_1 of the current limit switching circuit 60 via the no. 14 pin 20_14.

The no. 8 pin 20 is connected to the other end of the current limiting resistor 40b. Moreover, the no. 8 pin 20_8 is connected to the no. 3 pin 24_3 of the comparator circuit 24.

Here, the current limiting resistor 40 is a resistor that determines the current flowing to the electrolytic cell 1. Here, the relationship between the resistance set between the no. 6 pin 20_6 and the no. 7 pin 20_7 (denoted as resistance value Rprog) and the electrolysis current Ielectrolytic is expressed as a set current formula, which is provided in the comparator circuit 24, shown as Equation (1) below, using current comparison reference voltage Vref of a current error amplifier and resistance value Rs of the current detecting resistor 30 for example.

$$\text{Equation (1)} \quad \text{Rprog} = \text{Vref(V)} \times \text{constant k} / (\text{Rs (m}\Omega) \times \text{Ielectrolytic})$$

Accordingly, each of the resistance values PR1 and PR2 of the current limiting resistor 40 are set based on Equations (2) and (3) below, using; the reference voltage used for comparison against the electrolysis current (hereunder, referred to as current comparison reference voltage), the current values desired to be flowed to the electrolytic cell 1 (referred to as high side reference current value and low side reference current value respectively), and the internal offset voltage of the comparator circuit 24.

$$\text{Equation (2)} \quad \text{RP1} = (\text{current comparison reference voltage} \times \text{constant k}) / (\text{Rs} \times$$

$$\text{high side reference current} + \text{internal offset voltage})$$

$$\text{Equation (3)} \quad \text{RP1} + \text{RP2} = (\text{current comparison reference voltage} \times \text{constant k})$$

$$/ (\text{Rs} \times \text{low side reference current} + \text{internal offset voltage})$$

The high side reference current is an upper limit value of the electrolysis current to be supplied to the electrolytic cell 1, and the low side reference current is a lower limit value of the electrolysis current to be supplied to the electrolytic cell 1 (a current value smaller than the high side reference current, and greater than 0). Moreover, these reference currents are currents that flow between the no. 2 pin 24_2 and the no. 3 pin 24_3 of the comparator circuit 24.

Switching of the respective reference currents above is controlled by the current limit switching circuit 60. As shown in FIG. 1 and FIG. 2, in the current limit switching circuit 60, the no. 1 pin 60_1 is connected to the common connection point of the other end of the current limiting resistor 40a and one end of the current limiting resistor 40b via the no. 14 pin 20_14 and the no. 7 pin 20_7 of the switching CVCC power supply circuit 20. Moreover, the no. 2 pin 60_2 is connected to 0V via the no. 13 pin 20_13 of the switching CVCC power supply circuit 20. Also, the no. 3 pin 60_3 receives input of an ON/OFF control signal (pulse signal of controlled duty ratio) from outside. The current limit switching circuit 60 performs control to cause the current limiting resistor 40 to generate the high side reference current mentioned above, according to the ON state of the ON/OFF control signal (the state where the pulse signal level is H). Moreover, the current limit switching circuit 60 performs control to cause the current limiting resistor 40 to generate the low side reference current mentioned above, according to the OFF state of the ON/OFF control signal (the state where the pulse signal level is L).

As shown in FIG. 1, the voltage division resistor 50 is configured with a series resistance of a voltage division resistor 50a (denoted as resistance value R1) and a voltage division resistor 50b (denoted as resistance value R2).

The no. 9 pin 20_9 is connected to one end of the voltage division resistor 50a. Moreover, the no. 9 pin 20_9 is connected, for example, to the no. 1 pin 20_1, and receives an input of electrolysis voltage (monitor voltage Vmoni; detection voltage) that is applied to the electrolytic cell 1. Furthermore, the no. 9 pin 20_9 is connected to the no. 4 pin 24_4 of the comparator circuit 24 shown in FIG. 2.

The no. 10 pin 20_10 is connected to the common connection point of the other end of the voltage division resistor 50a and one end of the voltage division resistor 50b. This common connection point is connected to the no. 5 pin of the comparator circuit 24 via the no. 10 pin 20_10. The divided voltage that arises at this common connection point is hereunder referred to as feedback voltage VFB.

The no. 11 pin 20_11 is connected to the other end of the voltage division resistor 50b. Moreover, the no. 11 pin 20_11 is a GND terminal, and is connected to 0V The no. 11 pin 20_11 is connected to the no. 6 pin 24_6 of the comparator circuit 24.

Here, the voltage division resistor 50 is a resistor that determines the maximum voltage to be applied to the electrolytic cell 1.

The respective resistor values R1 and R2 of the voltage division resistor 50, for example, in a return error amplifier provided in the comparator circuit 24, are set based on Equation (4) below, using the reference voltage used for comparison against the electrolysis voltage (denoted as the voltage comparison reference voltage), and the voltage value at the highest level that may be applied to the electrolytic cell 1 (denoted as the maximum voltage value of the electrolytic cell).

$$\text{Equation (4)} \quad \text{Maximum voltage value of electrolytic cell} = \text{voltage comparison reference voltage} \times (1 + R1/R2)$$

That is to say, the voltage division resistor 50 detects, at the no. 9 pin 20_9, the voltage of the no. 1 pin 20_1 (control terminal) as a monitor voltage Vmoni. The voltage division resistor 50 divides this detected monitor voltage Vmoni to thereby cause the feedback voltage VFB to arise at the no. 10 pin 20_10. The voltage division resistor 50 outputs the feedback voltage VFB to the no. 5 pin of the comparator circuit 24. The comparator circuit 24 receives an input of this feedback voltage VFB, and compares the feedback voltage VFB with the voltage comparison reference voltage mentioned above.

Returning to FIG. 1, the no. 12 pin 20_12 and the no. 13 pin 20_13 are connected respectively to the positive terminal and the negative terminal of an external direct-current power supply (not shown in FIG. 1) of the electrolytic cell constant-voltage constant-current power source circuit 10, and receive an input of DC power. This input power that is input (voltage and current) are set according to the rating of the electrolytic cell 1, that is, the rated current, the rated voltage, and the number of cells that constitute the electrolytic cell 1. For example, in the present embodiment, the per-cell rated voltage of the cells that constitute the electrolytic cell 1 is taken as 2V, which is a value between 1.5V and 2.5V for example, and the value yielded by multiplying this value by the number of cells, is set as an input voltage. The value of the rated voltage is not limited to the value range above, and is the total value of theoretical electrolysis voltage per single cell, over voltage, and voltage drops due to solution resistance.

The no. 15 pin 20_15 to no. 17 pin 20_17 are terminals for outputting electrolytic cell voltage monitoring, electrolytic cell current monitoring, and current detection signals respectively, to the external control device.

As shown in FIG. 2, these no. 15 pin 20_15 to no. 17 pin 20_17 are connected respectively to the no. 3 pin 25_3 to no. 5 pin 25_5, which are output terminals of the voltage-current monitor circuit 25.

In the voltage-current monitor circuit 25, the no. 1 pin 25_1 is connected to the no. 5 pin 20_5 of the switching CVCC power supply circuit 20 as described above. Moreover, the no. 2 pin 25_2 is connected to the no. 8 pin 24_8 of the comparator circuit 24.

The voltage-current monitor circuit 25 outputs analog data that indicates the voltage being applied to the electrolytic cell 1, from the no. 3 pin 25_3 to the outside via the no. 15 pin 20_15 of the switching CVCC power supply circuit 20.

Moreover, the voltage-current monitor circuit 25 outputs analog data that indicates the current being input from the comparator circuit 24 and flowing to the electrolytic cell (the current after conversion performed by the voltage-current detection circuit 23), from the no. 4 pin 25_4 to the outside via the no. 16 pin 20_16 of the switching CVCC power supply circuit 20.

Furthermore, based on the comparison result input from the comparator circuit 24 (the result of the current after conversion performed by the voltage-current detection circuit 23 being below the high side reference current mentioned above), the voltage-current monitor circuit 25 outputs a current detection signal that indicates that the switching CVCC power supply circuit 20 is not supplying constant current to the electrolytic cell 1, from the no. 5 pin 25_5 to the outside via the no. 17 pin 20_17 of the switching CVCC power supply circuit 20. The current detection signal format may be a format in which the contact point (pin) is turned ON when indicating an abnormality (for example, turned to the H level), or it may be a format in which it is turned to the H level when operating normally and to the L level when operating abnormally, from a fail-safe standpoint.

Returning to FIG. 1, the no. 18 pin 20_18 and the no. 19 pin 20_19 are connected respectively to both ends of the thermistor resistor 70. The other end of the thermistor resistor 70 is connected to the no. 6 pin 24_6 of the comparator circuit 24 via the no. 19 pin 20_19, and is grounded as with the no. 11 pin 20_11. On the other hand, one end of the thermistor resistor 70 is connected to the no. 7 pin of the comparator circuit 24 via the no. 18 pin 20_18.

When the temperature detected by the thermistor resistor 70 falls outside the preliminarily set rated temperature range of the electrolytic cell 1, the comparator circuit 24 outputs to the voltage control circuit 22, a control signal that instructs temporary stop of the electrolysis. Upon receiving an input of this control signal, the voltage control circuit 22 stops voltage supply to the electrolytic cell 1, and the electrolytic cell 1 stops electrolysis. Moreover, when the detected temperature of the thermistor resistor 70 returns within the rated temperature range, the comparator circuit 24 outputs to the voltage control circuit 22, a control signal that instructs to resume the electrolysis. Upon receiving an input of this control signal, the voltage control circuit 22 resumes voltage supply to the electrolytic cell 1, and the electrolytic cell I automatically resumes electrolysis.

As described above, the comparator circuit 24 shown in FIG. 2 has eight input terminals, namely no. 1 pin 24_1 to no. 8 pin 24_8, and an output terminal no. 9 pin 24_9.

The comparator circuit 24 compares the current after the conversion performed by the voltage-current detection circuit 23 that is input to the no. 1 pin 24_1 (electrolysis current), with the current flowing between the no. 1 pin 24_1 and the no. 3 pin 24_3 (the high side reference current and low side reference current flowing to the current limiting resistor 40), and outputs from the no. 9 pin 24_9, a current comparison result signal that indicates the comparison result.

Moreover, the comparator circuit 24 compares the feedback voltage VFB input to the no. 5 pin with the voltage comparison reference voltage (the preliminarily set reference voltage), and outputs from the no. 9 pin 24_9, a voltage comparison result signal that indicates the comparison result.

The voltage control circuit 22 has a no. 3 pin 22_3 and a no. 4 pin 22_4, which are the input terminals, and a no. 1 pin 22_1, which is an output terminal, described above, and a no. 2 pin 22_2, which is an input terminal connected to the no. 9 pin 24_9 of the comparator circuit 24.

Based on the current comparison result signal input from the no. 2 pin 22_2, the voltage control circuit 22 supplies electrolysis current from the no. 1 pin 22_1 to the electrolytic cell 1 via the no. 1 pin 20_1 of the switching CVCC power supply circuit 20, in a manner that does not allow the current after the conversion performed by the voltage-current detection circuit 23 (electrolysis current) to exceed the high side reference current. That is to say, the voltage control circuit 22 supplies constant current to the electrolytic cell 1. Moreover, based on the current comparison result signal, the voltage control circuit 22 supplies electrolysis current from the no. 1 pin 22_1 to the electrolytic cell 1 via the no. 1 pin 20_1 of the switching CVCC power supply circuit 20, in a manner that does not allow the electrolysis current to fall below the low side reference current.

Also, based on the voltage comparison result signal, the voltage control circuit 22 supplies electrolysis voltage to the electrolytic cell 1 in a manner that does not allow the feedback voltage VFB to exceed the reference voltage. That is to say, constant voltage is applied to the electrolytic cell 1 in a manner that does not allow the voltage applied to the electrolytic cell 1 to exceed the maximum electrolysis voltage.

The electrolytic cell constant-voltage constant-current power source circuit 10 (power control device) has the circuit configuration described above. Accordingly, it can switch between the constant current control mode and the constant voltage control mode according to changes in the concentration of the electrolyte solution in the electrolytic cell 1, and supply an applied voltage to the electrolytic cell 1. Hereunder, the constant current control mode and the constant voltage control mode are described.

(Constant Current Control Mode)

The electrolysis current control in the electrolytic cell 1 is performed by controlling the electrolysis current detected by the current detecting resistor 30 to not exceed the set maximum electrolysis current (high side reference current). For example, if an output voltage Vout is applied from the no. 1 pin 20_1 of the switching CVCC circuit 20 to the electrolytic cell 1, the current detecting resistor 30 senses an output current to the electrolytic cell 1. The current detecting resistor (sensing resistor) measures the voltage of both ends, converts the voltage to a current signal by means of the current amplifier in the voltage-current detection circuit 23 for example, and outputs this current signal to the comparator circuit 24.

For example, the current error amplifier present in the comparator circuit 24 compares this current signal with the reference current that is set to the current limiting resistor 40 (programmable resistor), and outputs to the no. 2 pin 22_2 of the voltage control circuit 22, a signal that instructs to correct the output current (comparison result signal). Since there are a low side reference current and a high side reference current as described above, the voltage control circuit 22 includes a function to output from the no. 1 pin 20_1 (control terminal), an output voltage signal (output voltage Vout) which has been pulse-width modulated so as to correspond to the ON state and the OFF state of the pulse signal (ON/OFF control signal).

(Constant Voltage Control Mode)

If the concentration of the electrolyte solution becomes low in the electrolytic cell 1, the voltage rises in order to maintain a constant current. If the maximum electrolysis voltage is reached, the voltage regulating function is exerted as described above, and control is switched to constant voltage control. The maximum electrolysis voltage level is set, using the voltage comparison reference voltage which is preliminarily set in the comparator circuit 24, and the voltage division resistor 50 (return resistance division) present in the comparator circuit 24, which is provided between the inputs of the return error amplifier. The feedback voltage VFB of this voltage division resistor 50 is compared by the voltage return error amplifier in the comparator circuit 24 against the reference voltage as described above, and the output voltage from the no. 1 pin 20_1 of the voltage control circuit 22 is controlled.

(Description of Embodiment)

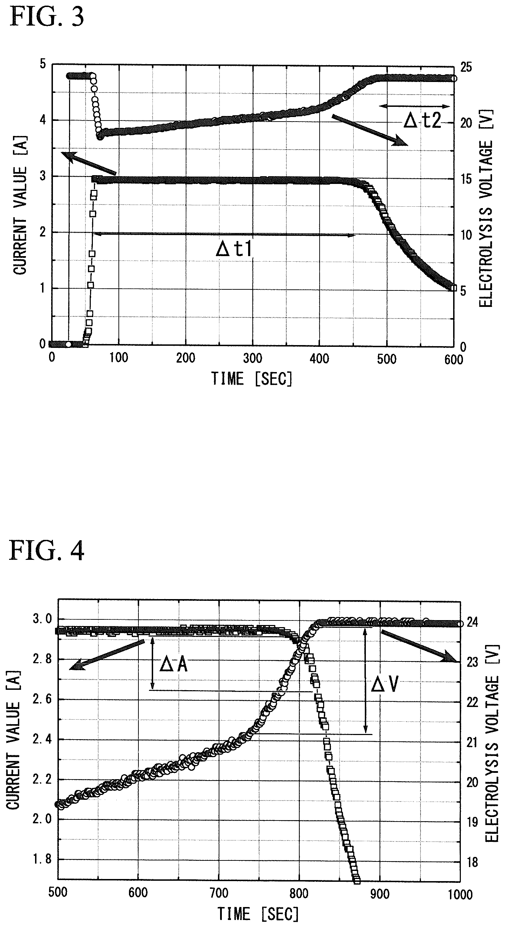

Next, with reference to FIG. 3 and FIG. 4, is described an operation of the electrolytic cell constant-voltage constant-current power source circuit 10 in which the constant current control mode and the constant voltage control mode are switched according to changes in the concentration of the electrolyte solution in the electrolytic cell 1, to supply an applied voltage to the electrolytic cell 1. FIG. 3 is a diagram for describing controls performed by the electrolytic cell constant-voltage constant-current power source circuit 10. FIG. 4 is an enlarged view of the portion of switching from the constant current control to the constant voltage control shown in FIG. 3. In FIG. 3 and FIG. 4, times on the horizontal axis are different. These figures show the control having been performed under the same conditions on different days and at different times.

FIG. 3 shows electrolysis in the electrolytic cell 1 that uses the electrolytic cell constant-voltage constant-current power source circuit 10 according to an embodiment of the present invention. In the graph in FIG. 3, the horizontal axis represents time, electrolysis current (electrolysis current) is plotted on the left vertical axis, and electrolytic cell voltage is plotted on the right vertical axis.

In FIG. 3, changes in electrolytic cell voltage according to time are shown on the upper portion, and changes in electrolytic cell current are shown on the lower portion. This example shown in FIG. 3 shows an electrolysis cycle in which the electrolytic cell 1 filled with hydrochloric acid serving as an electrolyte solution undergoes electrolysis. The electrolyte solution that fills the electrolytic cell 1 is not limited to hydrochloric acid.

In the electrolytic cell 1, hydrochloric acid undergoes electrolysis by means of two types of controls, namely a constant current control ($\Delta$t1) region and a constant voltage control ($\Delta$t2) region.

In the example shown in FIG. 3, the design is made so that the maximum current value of the circuit is 2.94 A and the maximum voltage is 24V where the number of cells of the electrolytic cell 1 is 12. If the electrolytic cell 1 is excessively filled with hydrochloric acid, normally an inrush current (over current) arises. However, constant current can be maintained by means of the constant current control described above, and therefore, inrush current can be prevented.

Making reference to FIG. 3, when the voltage of the electrolytic cell 1 reaches the maximum value (at approximately 480 sec in FIG. 3), the electrolytic cell constant-voltage constant-current power source circuit 10 shifts from the constant current control to the constant voltage control. In this manner, constant voltage (preliminarily set voltage comparison reference voltage described above) is automatically supplied to the electrolytic cell 1. When the electrolytic cell constant-voltage constant-current power source circuit 10 shifts to the constant voltage control, the current to the electrolytic cell 1 gradually attenuates as shown in the $\Delta$t2 region because the hydrochloric acid concentration decreases as the electrolysis progresses.

At this time, if the electrolytic cell 1 is a batch type electrolytic cell, completion of electrolysis can be shown using the current detection signal output from the no. 17 pin 20_17 after the current reaches the minimum threshold value, and the cycle of electrolysis can be ended.

On the other hand, without ending the electrolysis cycle, if hydrochloric acid is supplied to the electrolytic cell 1 during the constant voltage operation, with a current detection signal serving as an operation signal of a hydrochloric acid pump that supplies hydrochloric acid to the electrolytic cell 1, the current rises to the electrolysis current value, and the control shifts to the constant current control again. By repeating the cycle of the constant current control and the constant voltage control, it is possible to perform continuous electrolysis (the range $\Delta A$ shown in FIG. 4).

Furthermore, the current is maintained constant when the voltage of the electrolytic cell 1 increases (the range $\Delta V$ shown in FIG. 4). Utilizing this fact, by supplying an appropriate amount of hydrochloric acid to the electrolytic cell 1, it is also possible to perform continuous electrolysis with constant current.

As described above, the electrolytic cell constant-voltage constant-current power source circuit 10 of the embodiment of the present invention is a power control device that supplies electrolysis voltage and electrolysis current to the electrolytic cell 1 for producing electrolysis water by means of performing electrolysis on a raw material solution by passing an electric current between the anode 1 a and the cathode 1b, based on an input of direct-current power. The electrolytic cell constant-voltage constant-current power source circuit 10 has a constant current control mode in which electrolysis current is supplied to the electrolytic cell 1 while performing control so that the electrolysis current does not exceed the current value of the current comparison reference current (reference current preliminarily set according to the rated amperage per unit cell that constitutes the electrolytic cell 1). Moreover, the electrolytic cell constant-voltage constant-current power source circuit 10 has a constant voltage control mode in which electrolysis voltage is supplied to the electrolytic cell 1 while performing control so that the electrolysis voltage does not exceed the voltage value of the current comparison reference voltage (reference voltage preliminarily set according to the rated voltage per unit cell that constitutes the electrolytic cell 1, and the number of unit cells). The electrolytic cell constant-voltage constant-current power source circuit 10 applies power to the electrolytic cell 1 while switching between the constant current control mode and the constant voltage control mode according to the concentration of the electrolyte solution in the electrolytic cell.

According to the electrolytic cell constant-voltage constant-current power source circuit 10 of the embodiment of the present invention, the electric current and the electric voltage are supplied to the electrolytic cell, based on the current comparison reference voltage and the voltage comparison reference voltage (reference values preliminarily set according to the rated amperage and rated voltage per unit cell that constitutes the electrolytic cell 1, and the number of unit cells). As a result, according to the embodiment of the present invention, it is possible to provide a power control device that can be commonly used for electrolytic cells of different cell configurations.

Moreover, in the embodiment of the present invention, by providing the current limit switching circuit 60, when the pulse signal of controlled duty ratio is ON (the H level), the current limiting resistor 40 (programming resistor) is set to RP1, to control the comparator circuit 24 to the set current value (high side reference current). On the other hand, when the pulse signal of controlled duty ratio is OFF (the L level), the current limiting resistor 40 is set to RP1 + RP2, so that the value of electric current flowing to the electrolytic cell 1 can be controlled to a value that is above 0A and not less than a set current value (low side reference current), and that is also the closest possible to 0A.

Furthermore, the electrolytic cell constant-voltage constant-current power source circuit 10 of the embodiment of the present invention may be configured with minimum number of components (a resistor, a voltage-current conversion circuit, a comparator, and so forth) as described above. As a result, it is possible to provide the electrolytic cell constant-voltage constant-current power source circuit 10 of the embodiment of the present invention, as a low-cost and compact component of an electrolysis water making apparatus.

(Description of Second Embodiment)

In a second embodiment, there is described a constant current control board that prevents temperature rise in an electrolytic cell by performing throttling control of electrolysis according to an environmental temperature, without directly measuring the temperature of the interior and the surface of an electrolytic cell.

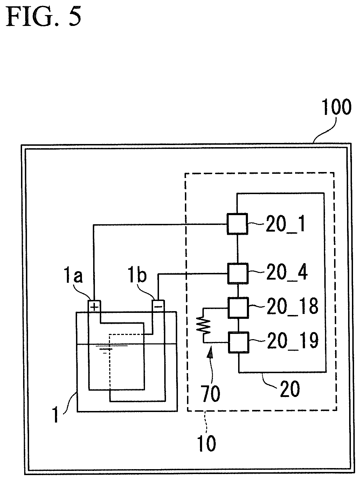

FIG. 5 is a diagram showing a configuration of an incorporated device 100 in which an electrolytic cell and a constant current control board are incorporated therein.

The electrolytic cell is equivalent to the electrolytic cell I described above, and the constant current control board is equivalent to the electrolytic cell constant-voltage constant-current power source circuit 10 in the above description (power control device). The incorporated device 100 is a device that uses electrolysis water produced in the electrolytic cell 1, and has the electrolytic cell 1 and the electrolytic cell constant-voltage constant-current power source circuit 10 incorporated therein.

In FIG. 5, a potion shown in FIG. 1 and FIG. 2 are shown with regard to the switching CVCC power supply circuit 20 (voltage-current control circuit). In FIG. 5, the omitted portions have been described with use of FIG. 1 and FIG. 2, and therefore, description of those portions are omitted.

As shown in FIG. 5, the electrolytic cell constant-voltage constant-current power source circuit 10 includes the thermistor resistor 70 in the above description. However, in the second embodiment, the thermistor resistor 70 is arranged in a position to detect an environmental temperature. Here, the environmental temperature refers to a temperature of the inner side of the incorporated device 100 that uses electrolysis water, which is also a temperature of the outside of the electrolytic cell. That is to say, the thermistor resistor 70 is not to directly measure the temperature of the interior and the surface of the electrolytic cell 1, but is to detect an environmental temperature. Also, another type of temperature sensor such as a thermostat may be used instead of a thermistor.

The throttling control corresponds to intermittent control in which the electrolytic cell constant-voltage constant-current power source circuit 10 causes the constant current control to occur and stop at intervals of certain time, according to the environmental temperature.

That is to say, when the environmental temperature detected by the thermistor resistor 70 falls outside the preliminarily set rated temperature range of the electrolytic cell 1, the comparator circuit 24 outputs to the voltage control circuit 22, a control signal that instructs temporary stop of the electrolysis. Upon receiving an input of this control signal, the voltage control circuit 22 stops constant current supply to the electrolytic cell 1, and the electrolytic cell 1 stops electrolysis. Moreover, when the environmental temperature detected by the thermistor resistor 70 returns to the rated temperature range, the comparator circuit 24 outputs to the voltage control circuit 22, a control signal that instructs to resume the electrolysis. Upon receiving an input of this control signal, the voltage control circuit 22 resumes constant current supply to the electrolytic cell 1, and the electrolytic cell 1 automatically resumes electrolysis.

Here, the value of constant electric current in the constant current control is a high side reference current value determined by the current limit switching circuit 60 where the ON state of the pulse signal is 100% and the OFF state is 0%. Moreover, in the state where constant current control is stopped, a 0A electric current, rather than a low side reference current value determined by the current limit switching circuit 60, flows into the electrolytic cell 1, as a result of the electrolytic cell constant-voltage constant-current power source circuit 10 and the current limit switching circuit 60 being cutoff. That is to say, the electrolytic cell constant-voltage constant-current power source circuit 10 is capable of performing the throttling control in which the constant current control is stopped when the environmental temperature exceeds the rated temperature, and the constant current control is resumed when the environmental temperature becomes below the rated temperature after the constant current control was stopped.

(Example of Experiment)

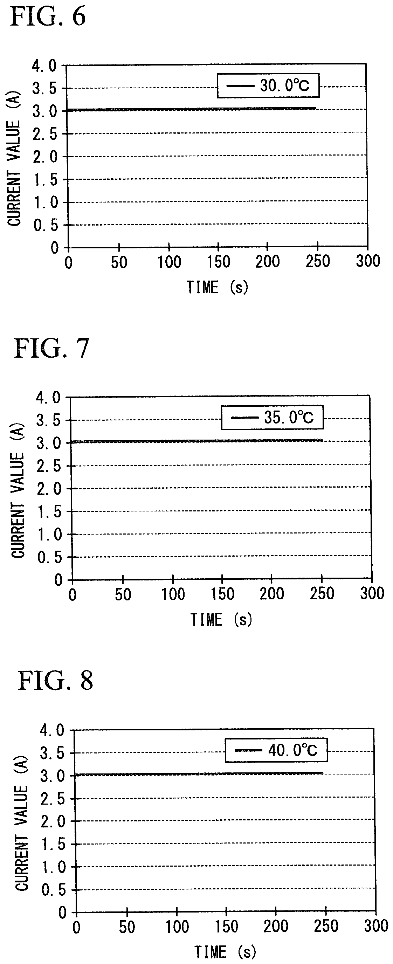

Here is described an example of an experiment in which the throttling control was performed, using the electrolytic cell 1, the electrolytic cell constant-voltage constant-current power source circuit 10, and the constant temperature reservoir (incorporated device 100) having these incorporated therein, with reference to FIG. 6 through FIG. 14. FIG. 6 through FIG. 12 respectively show changes in the electric current value observed over time at respective rated temperatures, where the rated temperatures are 30°C to 50°C.

As the electrolytic cell 1, an electrolytic cell with six cells was used. An adjustment was made by supplying 9% hydrochloric acid in the electrolytic cell 1, so that the electrolysis voltage at the time of applying a 3A electrolysis current to the switching CVCC power supply circuit 20 would be 10V. Chlorine gas produced as a result of the electrolysis was injected to water of a flow rate 20L per hour.

FIG. 6 is a diagram showing changes in the electric current value over time when the environmental temperature was 30°C. FIG. 7 is a diagram showing changes in the electric current value over time when the environmental temperature was 35°C. FIG. 8 is a diagram showing changes in the electric current value over time when the environmental the temperature was 40°C.

As shown in FIG. 6 to FIG. 8, when 40°C or lower, electrolysis was continuously performed in the constant current control mode.

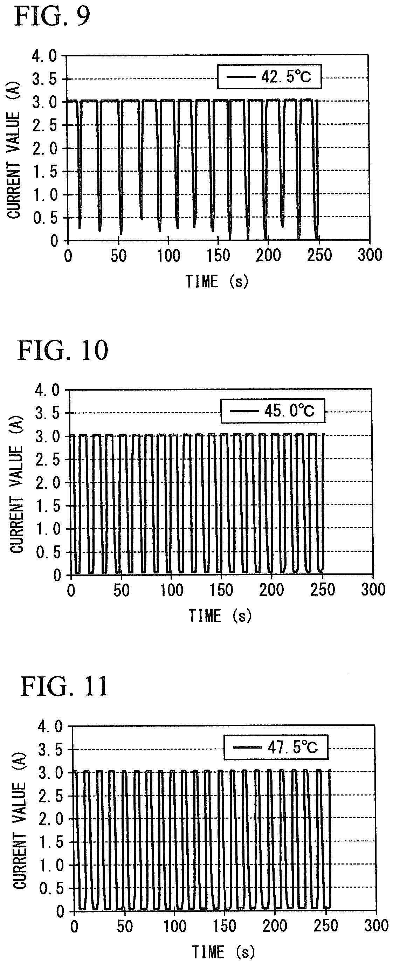

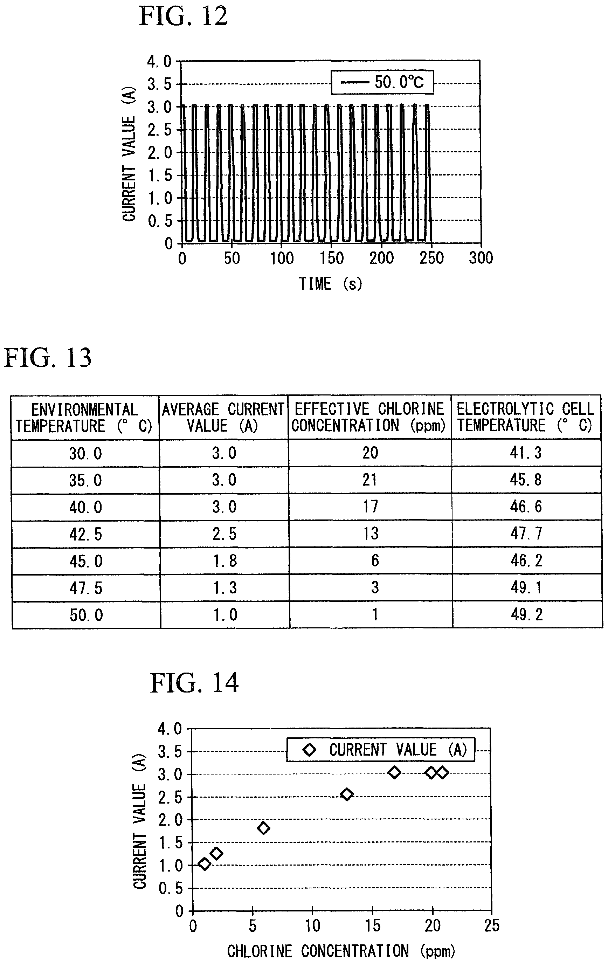

FIG. 9 is a diagram showing changes in the electric current value over time when the environmental temperature was 42.5°C. FIG. 10 is a diagram showing changes in the electric current value over time when the environmental temperature was 45°C. FIG. 11 is a diagram showing changes in the electric current value over time when the environmental temperature was 47.5°C. FIG. 12 is a diagram showing changes in the electric current value over time when the environmental temperature was 50°C.

As shown in FIG. 9 to FIG. 12, throttling occurred more frequently as the environmental temperature rose.

FIG. 13 is a diagram showing changes in the average current value, the effective chlorine concentration, and the electrolytic cell temperature with respect to the environmental temperature. FIG. 14 is a diagram showing a relationship between the average current value and the effective chlorine concentration.

Throttling occurs more frequently as the environmental temperature rises, and as a result, the average current value decreases as shown in FIG. 13. As shown in FIG. 14, the effective chlorine concentration becomes lower in proportion to the average current value. Moreover, as shown in FIG. 13, the occurrence of throttling keeps a balance between heat generation and cooling, and ultimately, the temperature of the electrolytic cell did not rise above 50°C even when the environmental temperature was 50°C.

The issue of heat generation in an electrolytic cell when operated continuously has been significant. When the temperature of an electrode exceeds 60°C, the coating material is more likely to become detached, which has an influence on the life of the electrolytic cell.

Heat generation of the electrolytic cell is influenced not only by the seasons but also by the temperature of the usage environment. However, by performing throttling control on electrolysis, it has become possible to reliably suppress temperature rise in the electrolytic cell due to heat generation in the electrolytic cell with respect to the environmental temperature. Heretofore, when it is not possible to suppress temperature rise in the electrolytic cell even after an attempt to provide cooling, electrolysis has to be stopped for protection of the electrolytic cell. However, in the present embodiment, by performing throttling control on electrolysis, it has become possible to suppress temperature rise in the electrolytic cell and continue electrolysis until the environmental temperature exceeds the rated temperature = the upper limit (50°C). As a result, in the incorporated device that incorporates therein the electrolytic cell, and the power control device capable of suppressing temperature rise in the electrolytic cell to suppress a reduction in the life of the electrodes, it is possible to suppress temperature rise in the electrolytic cell and suppress deterioration of the electrodes.

Furthermore, there has been concern over a problem that depending on the environmental temperature, if the temperature of a slightly acidic electrolysis water exceeds 40°C, hypochlorite molecules, which are the principal component thereof, are decomposed, and metals and resins used for the piping of the electrolytic cell and the incorporated device will become corroded. However, in the present embodiment, if the temperature of the electrolytic cell rises and the environmental temperature exceeds the rated temperature = 40°C, causing throttling to occur, then the effective chlorine concentration is lowered in proportion to the temperature rise, and thereby, suppression of corrosion caused by the electrolysis water can also be achieved.

Moreover, it has also become possible to report the magnitude of temperature abnormality (the magnitude of reduction in effective chlorine concentration according to the temperature) to a user when throttling occurs. Analog data that indicates the electric current flowing to the electrolytic cell is output to the outside via the no. 16 pin 20_16 of the switching CVCC power supply circuit 20. Since the constant current value corresponding to each rated temperature, the length of time during which the constant current flows, and the length of time of 0A can be understood from this analog data, it is possible to know the environmental temperature and the effective chlorine concentration that correspond to each rated temperature, by calculating the average current value.

While a detailed description of the embodiments of the present invention has been given above with reference to the drawings, the specific configuration is not limited to the embodiments described above, and various modifications and changes may be made without departing the scope of the invention.

INDUSTRIAL APPLICABILITY

In a power control device to be incorporated into an incorporated device of the present invention, a voltage-current control circuit stops supply of electrolysis current when an environmental temperature falls outside a preliminarily set rated temperature range, and resumes supply of the electrolysis current when the environmental temperature returns to the rated temperature range. Thereby, it is possible to suppress temperature rise in an electrolytic cell. As a result, according to the present invention, it is possible to provide an incorporated device that incorporates therein an electrolytic cell and a power control device that is capable of suppressing temperature rise in the electrolytic cell to thereby suppress a reduction in the life of electrodes, and a method for controlling an incorporated device.

Reference Symbols

1: Electrolytic cell
10: Electrolytic cell constant-voltage constant-current power source circuit
20: Switching CVCC power supply circuit
21: Voltage-current control circuit
22: Voltage control circuit
23: Voltage-current detection circuit
24: Amplifier and comparator circuit
25: Voltage-current monitor circuit
30: Current detecting resistor
40: Current limiting resistor
50: Voltage division resistor

60: Current limit switching circuit
70: Thermistor resistor
100: Incorporated device

**Claims**

1. An incorporated device that incorporates therein:

   an electrolytic cell that manufactures electrolysis water by electrolysis on a raw material solution by means of electric current applied between an anode and a cathode, and
   a power control device that supplies electrolysis current to the electrolytic cell based on input direct-current power, wherein the power control device comprises:

   a voltage-current control circuit that supplies, in a constant current control mode, the electrolysis current to the electrolytic cell while the voltage-current control circuit controls the electrolysis current not to exceed a current value of a reference current, the current value of the reference current being preliminary set according to a rated current of a unit cell constituting the electrolytic cell; and
   a temperature detecting part that detects an environmental temperature of an outside of the electrolytic cell, the environmental temperature being a temperature of an inside of the incorporated device, and
   the voltage-current control circuit stops supply of the electrolysis current when a detected temperature of the temperature detecting part falls outside of a preliminarily set rated temperature range, and resumes supply of the electrolysis current when the detected temperature of the temperature detecting part returns within the rated temperature range.

2. The incorporated device according to claim 1,
   wherein the power control device further comprises:

   a current detecting part that is connected to an output terminal of the voltage-current control circuit and detects a voltage arising between both ends thereof; and
   a current limiting part that generates the reference current, and
   the voltage-current control circuit comprises:

   a voltage-current detection circuit that calculates the electrolysis current flowing through the electrolytic cell, based on a voltage between both ends of the current detecting part and a resistance value of the current detecting part;
   a comparator circuit that compares the electrolysis current with the reference current generated by the current limiting part to output a current comparison result signal indicating a comparison result; and
   a voltage control circuit that supplies the electrolysis current from the output terminal to the electrolytic cell while the voltage control circuit controls the electrolysis current not to exceed the reference current based on the current comparison result signal.

3. The incorporated device according to claim 2, wherein the power control device further comprises:

   a voltage-current monitor circuit that outputs analog data that indicates an electric current value of the electrolysis current, to an outside.

4. A method for controlling an incorporated device, the incorporated device incorporating therein:

   an electrolytic cell that manufactures electrolysis water by electrolysis on a raw material solution by means of electric current applied between an anode and a cathode; and
   a power control device that supplies electrolysis current to the electrolytic cell based on input direct-current power, wherein the power control device comprises:

   a voltage-current control circuit that supplies, in a constant current control mode, the electrolysis current to the electrolytic cell while the voltage-current control circuit controls the electrolysis current not to exceed a current value of a reference current, the current value of the reference current being preliminary set according to a rated current of a unit cell constituting the electrolytic cell; and

a temperature detecting part that detects an environmental temperature of an outside of the electrolytic cell, the environmental temperature being a temperature of an inside of the incorporated device, and the voltage-current control circuit stops supply of the electrolysis current when a detected temperature of the temperature detecting part falls outside of a preliminarily set rated temperature range, and resumes supply of the electrolysis current when the detected temperature of the temperature detecting part returns within the rated temperature range.

# FIG. 1

ELECTROLYTIC CELL CONSTANT-VOLTAGE CONSTANT-CURRENT POWER SOURCE CIRCUIT 10

SWITCHING CVCC POWER SUPPLY CIRCUIT 20

20_1, 20_2, 20_3, 20_4, 20_5, 20_6, 20_7, 20_8, 20_9, 20_10, 20_11

20_12, 20_13, 20_14, 20_15, 20_16, 20_17, 20_18, 20_19

DC POWER INPUT

60_1
60_2
60_3
CURRENT LIMIT SWITCHING CIRCUIT 60

ELECTROLYTIC CELL VOLTAGE MONITOR
ELECTROLYTIC CELL CURRENT MONITOR
CURRENT DETECTION SIGNAL

30
40 { 40a 40b }
50 { 50a 50b }
70

1 : ELECTROLYTIC CELL
1a
1b

EP 3 219 679 A1

# FIG. 2

20:SWITCHING CVCC POWER SUPPLY CIRCUIT

21:VOLTAGE-CURRENT CONTROL CIRCUIT

EP 3 219 679 A1

FIG. 3

FIG. 4

FIG. 5

FIG. 6

FIG. 7

FIG. 8

FIG. 9

FIG. 10

FIG. 11

FIG. 12

FIG. 13

| ENVIRONMENTAL TEMPERATURE (° C) | AVERAGE CURRENT VALUE (A) | EFFECTIVE CHLORINE CONCENTRATION (ppm) | ELECTROLYTIC CELL TEMPERATURE (° C) |
|---|---|---|---|
| 30.0 | 3.0 | 20 | 41.3 |
| 35.0 | 3.0 | 21 | 45.8 |
| 40.0 | 3.0 | 17 | 46.6 |
| 42.5 | 2.5 | 13 | 47.7 |
| 45.0 | 1.8 | 6 | 46.2 |
| 47.5 | 1.3 | 3 | 49.1 |
| 50.0 | 1.0 | 1 | 49.2 |

FIG. 14

EP 3 219 679 A1

## INTERNATIONAL SEARCH REPORT

International application No.

PCT/JP2015/080953

### A. CLASSIFICATION OF SUBJECT MATTER
*C02F1/46(2006.01)i, C25B9/04(2006.01)i*

According to International Patent Classification (IPC) or to both national classification and IPC

### B. FIELDS SEARCHED

Minimum documentation searched (classification system followed by classification symbols)
C02F1/46, C25B9/04

Documentation searched other than minimum documentation to the extent that such documents are included in the fields searched
Jitsuyo Shinan Koho        1922-1996   Jitsuyo Shinan Toroku Koho   1996-2015
Kokai Jitsuyo Shinan Koho  1971-2015   Toroku Jitsuyo Shinan Koho   1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2014/050865 A1 (Morinaga Milk Industry Co., Ltd.), 03 April 2014 (03.04.2014), paragraphs [0037] to [0094]; fig. 1 to 9 & US 2015/0259223 A1 paragraphs [0101] to [0197]; fig. 1 to 9 & EP 2902532 A1    & KR 10-2015-0038613 A & CN 104662205 A    & TW 201418522 A | 1-4 |
| Y | JP 6-91266 A (Janikkusu Kabushiki Kaisha), 05 April 1994 (05.04.1994), claims 1, 2; paragraphs [0002] to [0004]; fig. 1, 2 (Family: none) | 1-4 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    24 December 2015 (24.12.15) | Date of mailing of the international search report<br>    12 January 2016 (12.01.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

## INTERNATIONAL SEARCH REPORT

International application No.

PCT/JP2015/080953

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-72659 A (Honda Motor Co., Ltd.), 09 April 2009 (09.04.2009), claims 1 to 8; paragraphs [0025] to [0073]; fig. 1 to 9 & US 2009/0071843 A1 paragraphs [0031] to [0079]; fig. 1 to 9 & GB 2453050 A & CA 2639613 A & KR 10-2009-0030232 A & IE 20080695 A & TW 200925120 A | 1-4 |
| A | JP 2000-93969 A (Matsushita Electric Industrial Co., Ltd.), 04 April 2000 (04.04.2000), claims 1 to 7; paragraph [0033]; fig. 1 to 4 (Family: none) | 1-4 |
| P,Y | WO 2014/199950 A1 (Morinaga Milk Industry Co., Ltd.), 18 December 2014 (18.12.2014), claims 1 to 8; fig. 1, 2 & JP 5728626 B & TW 201512459 A | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014228806 A

- JP 3986820 B